# EUROPÄISCHE PATENTSCHRIFT

(11) **EP 1 528 412 B1**
(45) Veröffentlichungstag und Bekanntmachung des Hinweises auf die Patenterteilung: **11.05.2011**
(21) Anmeldenummer: 03104046.2
(22) Anmeldetag: 31.10.2003
(51) Int. Cl.: G01T 1/29

(54) **Leuchtstoffauslesevorrichtung und Leuchtstoffausleseverfahren**
Photostimulable phosphor read-out method and apparatus
Méthode et système de lecture pour substance luminescente photostimulable

(43) Veröffentlichungstag der Anmeldung: 04.05.2005
(73) Patentinhaber: Agfa-Gevaert HealthCare GmbH, 50670 Köln (DE)
(72) Erfinder: Sang, Bernhard, 81669, München (DE); Nitsche, Werner, 82008, Unterhaching (DE); Weinberger, Michael, 86450 Altenmünster (DE)

(56) Entgegenhaltungen:
- EP-A- 0 866 501
- DE-A- 3 503 698
- US-A- 5 091 970
- MARK STANFORD ROBBINS ET AL: "THE NOISE PERFORMANCE OF ELECTRON MULTIPLYING CHARGE-COUPLED DEVICES" IEEE TRANSACTIONS ON ELECTRON DEVICES, IEEE INC. NEW YORK, US, Bd. 50, Nr. 5, Mai 2003 (2003-05), Seiten 1227-1232, XP001168181 ISSN: 0018-9383

## Beschreibung

Die vorliegende Erfindung betrifft eine Leuchtstoffauslesevorrichtung zum Auslesen von in einem Speicherleuchtstoff abgespeicherten Informationen mit einer Detektionseinrichtung zum Detektieren von von dem Speicherleuchtstoff ausgebbarer Emissionsstrahlung unter Gewinnung von Detektionssignalen und einer Speichereinrichtung zum Zwischenspeichern der unverarbeiteten Detektionssignale. Darüber hinaus betrifft die vorliegende Erfindung ein entsprechendes Leuchtstoffausleseverfahren.

Das Auslesen von in einer Bildplatte gespeicherten Röntgeninformationen erfolgt bekanntermaßen durch Anregung der Bildplatte mit Simulationslicht im Spektralbereich des sichtbaren, roten Lichts und Detektion des angeregten Emissionslicht im Spektralbereich des sichtbaren, blauen Lichts. Das Emissionslicht wird hierbei von einem Detektor erfasst und in entsprechende Bildsignale umgewandelt, die in einem nachgeschalteten Ausleseverstärker verstärkt und anschließend einem A/D-Wandler zugeführt werden. Als Detektor wird meist ein lineares, d.h. einzeiliges Charge-Coupled-Device (CCD) eingesetzt.

Eine gattungsgemäße Vorrichtung und ein gattungsgemäßes Verfahren zum Auslesen von in einem Speicherleuchtstoff abgespeicherten Informationen sind aus der Druckschrift EP 1 319 963 A1 bekannt. Dabei wird mittels eines Detektionsmittels von dem Speicherleuchtstoff ausgegebene Emissionsstrahlung detektiert. Das Detektionsmittel weist eine Vielzahl von strahlungsempfindlichen Flächen auf, mit denen während einer vorgegebenen Integrationszeit Emissionsstrahlung empfangen werden kann. Die Bildsignale sind wegen der im Allgemeinen schwachen Intensität des Emissionslichts meist sehr klein und können durch elektromagnetische Felder benachbarter Komponenten im Auslesegerät signifikant gestört werden. Darüber hinaus kann die Bildqualität auch durch elektronisches Rauschen des Ausleseverstärkers und des A/D-Wandlers beeinträchtigt werden.

DE 35 03 698 A1 offenbart eine Vorrichtung zum Auslesen von Speicherleuchtstoffplatten. Das in der Speicherleuchtstoffplatte angeregte Licht wird mittels einer Photodiodenzeile erfasst und in entsprechende Signale umgewandelt, die einem Vorverstärker zugeführt werden.

Aus US 5,091,970 ist eine Vorrichtung zur Digitalisierung eines auf einem Röntgenfilm aufgezeichneten Röntgenbildes bekannt, bei welcher der Röntgenfilm mit dem Licht einer länglichen Lichtquelle bestrahlt wird und das durch den Röntgenfilm hindurchgehende Licht mit einem MOS-Sensor erfasst wird. Die hierbei im MOS-Sensor erzeugten Ladungen werden in Kondensatoren gespeichert und die entsprechenden Signale einem Vorverstärker zugeführt.

Auch bei den letztgenannten beiden Vorrichtungen aus dem Stand der Technik können die Bildsignale auf ihrem Weg von der Photodiodenzeile bzw. vom MOS-Sensor zum Vorverstärker durch elektromagnetische Felder benachbarter Komponenten signifikant gestört werden.

Die Aufgabe der vorliegenden Erfindung besteht darin, den Einfluss von elektromagnetischen Feldern und anderen Rauschquellen auf die Bildsignale zu vermindern.

Erfindungsgemäß wird diese Aufgabe gemäß den Ansprüche 1 und 8 gelöst.

Bei dem entsprechenden Leuchtstoffausleseverfahren ist erfindungsgemäß vorgesehen, die zwischengespeicherten, unverarbeiteten Detektionssignale für eine nachfolgende Signalverarbeitung, beispielsweise eine A/D-Wandlung, vorzuverstärken.

Die Speichereinrichtung umfasst ein Ausleseregister und die Verstärkungseinrichtung ein Verstärkungsregister. Dabei wird das Ausleseregister zum raschen Auslesen günstigerweise parallel betrieben und das Verstärkungsregister zur Erzielung einer hohen Gesamtverstärkung seriell. Hierbei werden die Detektionssignale oder elektrischen Ladungen, die den einzelnen lichtempfindlichen Flächen, den sog. Pixels, der Detektionseinrichtung entsprechen, aus der Detektionseinrichtung parallel ausgelesen und im Ausleseregister zwischengespeichert. Von dort aus durchlaufen die Signale bzw. Ladungen dann seriell, d.h. nacheinander, das dem Ausleseregister nachgeschaltete Verstärkungsregister.

Durch die Anordnung der Detektionseinrichtung, der Speichereinrichtung und der Verstärkungseinrichtung auf einem einzigen Chip reduzieren sich darüber hinaus Herstellungs- und Montagekosten und somit die Anschaffungskosten der Leuchtstoffauslesevorrichtung.

Die erfindungsgemäße Leuchtstoffauslesevorrichtung ist bevorzugt als Elektronenvervielfachungs-CCD (EMCCD) ausgebildet. Da eine (Vor-) Verstärkung der Ladungen bereits im Verstärkungsregister des EMCCD erfolgt (sog. "on-chip-Verstärkung"), wird der Einfluss von äußeren elektromagnetischen Feldern auf die entsprechend höheren Ausgangssignale des EMCCD vermindert. Außerdem wird der Einfluss des sogenannten Ausleserauschens eines nachgeschalteten A/D-Wandlers deutlich reduziert. Darüber hinaus wird eine höhere Quanteneffizienz im Spektralbereich des Emissionslichts bei beispielsweise 400 nm im Vergleich zu konventionellen CCDs erreicht.

Die Detektionseinrichtung kann mehrere Detektionsabschnitte aufweisen, die voneinander getrennt auslesbar und vorverstärkbar sind. Hierzu kann eine EMCCD-Zeile aus mehreren EMCCD-Segmenten bzw. -abschnitten, beispielsweise mit jeweils 512 lichtempfindlichen Detektorelementen (Pixels), zusammengesetzt sein. Dabei erfolgt die Vorverstärkung der jeweiligen Bildsignale in jedem einzelnen Segment separat. Als Vorteil erweist sich der Zeitgewinn durch parallele Verstärkung gegenüber serieller Verstärkung beim Auslesen der ganzen Zeile.

Vorzugsweise ist in der Verstärkungseinrichtung die Verstärkung pixelweise variierbar. Dies hat Vorteile bei der Kompensation von lokalen Empfindlichkeitsschwankungen, beispielsweise auf Grund unterschiedlicher Lichtempfindlichkeit der Detektorelemente der EMCCD. Die Empfindlichkeitsschwankungen können aber auch durch die (Fokussier-) Optik auf Grund herstellerbedingter Schwankungen, Abbildungsfehler etc. zwischen der Bildplatte und dem Detektor bedingt sein.

Durch eine entsprechende Einstellung des Verstärkungsfaktors V zwischen typischerweise 1 und 1000 können die Empfindlichkeitsschwankungen hinreichend korrigiert werden.

Darüber hinaus kann in der Verstärkungseinrichtung die Verstärkung in Abhängigkeit der Röntgendosis (sog. Speed Class), mit der der Speicherleuchtstoff aktiviert ist, gesteuert werden. Durch die entsprechende Einstellung des Verstärkungsfaktors V können die Bildsignale unabhängig von der jeweiligen Speed-Class "genormt" werden. Dies bedeutet, dass der Verstärkungsfaktor V um so größer ist, je geringer die Röntgendosis ist.

Ferner kann in der Verstärkungseinrichtung die Verstärkung so einstellbar sein, dass die vorverstärkten Auslesesignale einen vorgegebenen Dynamikumfang besitzen. So kann der Verstärkungsfaktor V beispielsweise derart eingestellt werden, dass bei nachfolgender A/D-Wandlung die ganze Breite (z.B. 16 Bit) der A/D-Wandlung ausgeschöpft wird.

Günstigerweise beträgt das Verhältnis zwischen maximal möglicher und minimal möglicher Verstärkung in der Verstärkungseinrichtung mindestens 50. Auf diese Weise kann der Wert des Verstärkungsfaktors V mit hoher Genauigkeit (z. B. 6 Bit und mehr) vorgegeben werden.

Schließlich wird eine erfindungsgemäße Vorrichtung bevorzugt, bei der der Verstärkungsfaktor in der Verstärkungseinrichtung während des Auslesens eines Speicherleuchtstoffbilds automatisch angepasst werden kann. Somit kann die Anpassung des Verstärkungsfaktors V während der Bewegung des Scanners, gegebenenfalls einschließlich einer Stimulationslichtquelle, über die Bildplatte kontinuierlich erfolgen. Die Anpassung kann beispielsweise durch Einstellung des Verstärkungsfaktors in Abhängigkeit von der Intensität des zuvor empfangenen Emissionslichts erfolgen.

Die vorliegende Erfindung wird nun anhand der beigefügten Zeichnungen näher erläutert, in denen zeigen:
- Fig. 1: eine schematische Ansicht einer Leuchtstoffauslesevorrichtung;
- Fig. 2: ein Blockschaltbild eines EMCCD mit anschließendem A/D-Wandler; und
- Fig. 3: ein prinzipielles Aufbauschema eines EMCCD mit mehreren Auslese- und Verstärkungsregistern für eine Zeile.

Die nachfolgend näher beschriebenen Ausführungsbeispiele stellen bevorzugte Ausführungsformen der vorliegenden Erfindung dar.

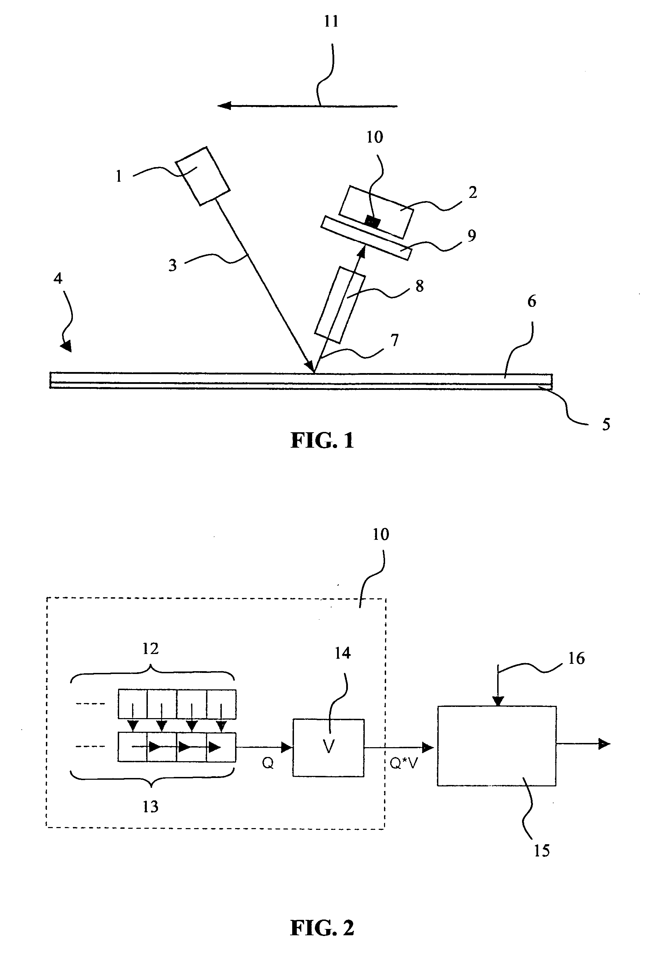

Die in Fig. 1 schematisch wiedergegebene Auslesevorrichtung besteht im Wesentlichen aus einer Stimulationslichtquelle 1 und einem Detektor 2. Die Stimulationslichtquelle 1 besteht aus mehreren Laserdioden, die auf einer zur Zeichnungsebene senkrechten Achse angeordnet sind. Das von der Stimulationslichtquelle 1 abgestrahlte Licht wird gegebenenfalls durch eine nicht dargestellte Zylinderlinse fokussiert. Der Übersicht halber ist hier in Fig. 1 lediglich ein Lichtstrahl 3 dargestellt, der auf eine Bildplatte 4 trifft. Der Lichtstrahl 3 repräsentiert hier also eine Lichteinfallebene des Lichts der mehreren Laserdioden senkrecht zur Zeichnungsebene.

Die Bildplatte 4 besteht aus einer Trägerschicht 5 und einer Phosphorfolie 6, die durch Röntgenstrahlung belichtet ist. Durch das Stimulationslicht 3 im roten Spektralbereich wird die Phosphorfolie 6 in Abhängigkeit von der Belichtungsintensität mit Röntgenstrahlung zur Emission von blauem Licht, dargestellt durch einen E-missionslichtstrahl 7, angeregt. Dieses Emissionslicht wird mit Hilfe einer Fokussieroptik 8, vorzugsweise einem Mikrolinsen-Array, durch ein Filter 9, das nur das Emissionslicht passieren lässt, auf den Detektor 2 gerichtet.

Der Detektor 2 weist eine Vielzahl lichtempfindlicher Detektorelemente 10 auf, die ebenfalls senkrecht zur Zeichnungsebene angeordnet sind. Die Gesamtheit der einzelnen Detektorelemente ist als Elektronenvervielfachungs-CCD (EMCCD) ausgestaltet, so dass ein lineares EMCCD-Array vorliegt.

Die gesamte zeilenförmig ausgebildete Auslesevorrichtung wird in Richtung des Pfeils 11 über die Bildplatte 4 bewegt. Dabei werden sämtliche Bildpunkte (Pixel) der Phosphorfolie 6 bei einer linearen Bewegung der Auslesevorrichtung, die mindestens die Breite der Bildplatte 4 besitzt, ausgelesen.

In Fig. 2 ist das lichtempfindliche Detektorelement 10, d.h. das EMCCD-Array, schematisch näher dargestellt. Es besitzt ein Array mit lichtempfindlichen Flächen, im vorliegenden Fall ein CCD-Array 12 mit linear angeordneten CCDs. Bei einem Auslesevorgang werden die Ladungen des CCD-Arrays 12 in ein Ausleseregister 13 parallel übertragen. Die Ladungen bzw. Photoelektronen Q wandern durch das Ausleseregister 13 seriell in ein Verstärkungsregister 14. In diesem Verstärkungsregister 14 werden die Ladungen mit einem gegebenenfalls pixelweise individuellen Verstärkungsfaktor V verstärkt, so dass sich für jedes Pixel ein Ausgangssignal Q * V ergibt. Erst nach dieser Verstärkung werden diese Signale weiter verarbeitet, was im Falle von Fig. 2 durch einen A/D-Wandler 15 angedeutet ist. Bei der Verarbeitung wird das Nutzsignal durch ein Rauschsignal überlagert, das durch den Pfeil 16 symbolisiert ist.

Die Verwendung von EMCCD-basierten Bildsensoren, die beispielsweise von dem Hersteller E2V geliefert werden, ermöglicht es, die Rauschquellen des Ausleseverstärkers und der A/D-Wandlung auf ein Rauschäquivalent kleiner als 1 e- rms zu reduzieren. Dies gelingt durch das Verstärken der auf dem Chip in einem Pixel erzeugten Photoelektronen (on-chip-Verstärkung) im Rahmen des Auslesevorgangs in einem zusätzlichen Ausleseregisterbereich (Verstärkungsregister 13), den jedes Pixel während des Auslesevorgangs einzeln durchläuft. Durch entsprechend angelegte Spannungen in dem Verstärkungsregister 13 kann ein Avalanche-Effekt zur Erzeugung einer variablen Verstärkung von Faktoren zwischen 1 und 1000 ausgenutzt werden. Dabei nimmt die Elektronenanzahl von Element zu Element des Verstärkungsregisters zu, bevor das Signal durch den A/D-Wandler digitalisiert und ausgelesen wird.

Das EMCCD-Array eröffnet die Möglichkeit, insbesondere bei geringen Signalamplituden die gemessene Ladung zu verstärken und somit das Signal-zu-Rauschverhältnis wesentlich zu verbessern, da der Rauschbeitrag auch nach der Verstärkung unverändert ist. Gerade bei Röntgenaufnahmen mit geringer Dosis ergibt sich somit das Potential, das Rauschen des Gesamtsystems bis zum unvermeidbaren Schrotrauschen zu reduzieren und Einzelphotonenempfindlichkeit zu erreichen.

Die Erfindung lässt sich auf alle CCD-basierten Systeme anwenden, da lediglich im Bereich des Ausleseregisters Strukturveränderungen am CCD-Chip vorzunehmen sind.

Als besonderer Vorteil dieser Technik ist somit die nahezu vollständige Eliminierung von Rauschquellen aus einem bildgebenden Apparat in der röntgenmedizinischen Diagnostik zu nennen, wobei gleichzeitig die Vorverstärkung der Detektionssignale bzw. Ladungen an die verwendete Dosis über einen weiten Bereich, typischerweise zwischen 1 und 1000, angepasst werden kann

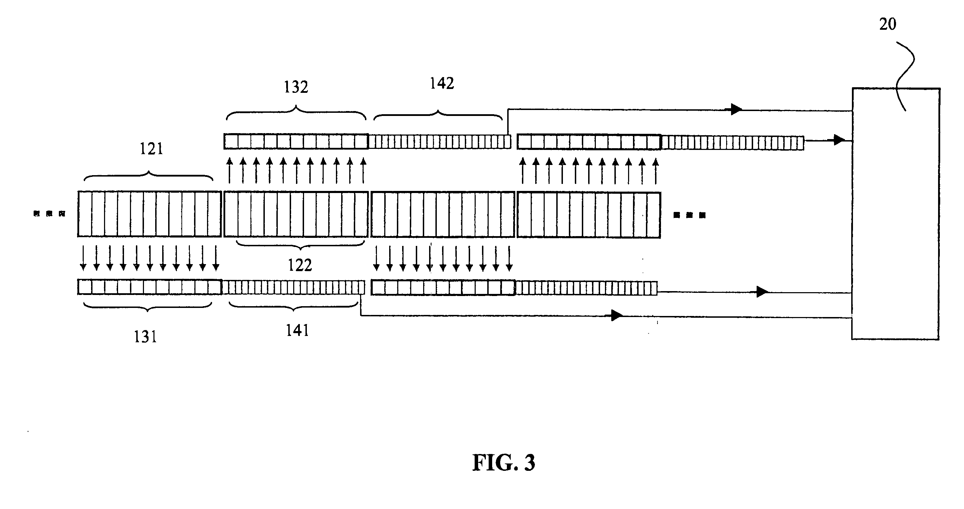

In einem zweiten Ausführungsbeispiel ist das lineare EMCCD-Array gemäß Fig. 3 in mehrere Segmente unterteilt. Jedes dieser Segmente besitzt ein lineares CCD-Array 121 und 122 sowie ein entsprechend zugeordnetes Ausleseregister 131 bzw. 132 und ein daran angeschlossenes Verstärkungsregister 141 bzw. 142. Durch die Unterteilung der Detektorzeile in mehrere Segmente und die Bereitstellung jeweils eines Verstärkungsregisters für jedes Segment wird eine parallele Vorverstärkung von Signalen bzw. Ladungen unterschiedlicher Segmente ermöglicht. Der Auslese- und Vorverstärkungsprozess insgesamt wird dadurch beschleunigt.

In einer Verarbeitungseinheit 20 werden die vorverstärkten Bildsignale der einzelnen Segmente, d.h. die seriellen Ausgangssignale der einzelnen Verstärkungsregister 141, 142 etc. zu einer Bildzeile der ausgelesenen Phosphorfolie zusammengefasst. Die bei dem gesamten Auslesevorgang erhaltenen Bildzeilen der Phosphorfolie werden schließlich zu einem Gesamtbild der Phosphorfolie zusammengefügt und können, ggf. nach einer weiteren Verarbeitung, visuell dargestellt und zu diagnostischen Zwecken herangezogen werden.

## Patentansprüche

1. Leuchtstoffauslesevorrichtung zum Auslesen von in einem Speicherleuchtstoff (6) abgespeicherten Informationen mit
- einer Detektionseinrichtung (2) zum Detektieren von von dem Speicherleuchtstoff (6) ausgebbarer Emissionsstrahlung (7) unter Gewinnung von Detektionssignalen,
- einer Speichereinrichtung (13) mit einem Ausleseregister zum Zwischenspeichern der unverarbeiteten Detektionssignale und
- einer Verstärkungseinrichtung (14) mit einem Verstärkungsregister zu einer Vorverstärkung der unverarbeiteten, zwischengespeicherten Detektionssignale für eine nachfolgende Signalverarbeitung,
**dadurch gekennzeichnet, dass** die Detektionseinrichtung (2), die Speichereinrichtung (13) und die Verstärkungseinrichtung (14) auf einem einzigen Chip angeordnet sind und die Detektionseinrichtung (2) mehrere Detektionsabschnitte (121, 122) aufweist, wobei jeder der Detektionsabschnitte (121, 122) ein CCD-Array aufweist, welchem jeweils ein Ausleseregister (131, 132) und ein daran angeschlossenes Verstärkungsregister (141, 142) zugeordnet ist, so dass die Detektionsabschnitte (121, 122) voneinander getrennt auslesbar und vorverstärkbar sind.

2. Vorrichtung nach einem der vorhergehenden Ansprüche, die als Elektronen-Vervielfachungs-CCD (10) ausgebildet ist.

3. Vorrichtung nach einem der vorhergehenden Ansprüche, wobei in der Verstärkungseinrichtung (14) die Verstärkung pixelweise variierbar ist.

4. Vorrichtung nach einem der vorhergehenden Ansprüche, wobei in der Verstärkungseinrichtung (14) die Verstärkung in Abhängigkeit einer Röntgendosis, mit der der Speicherleuchtstoff (6) aktiviert ist, steuerbar ist.

5. Vorrichtung nach einem der vorhergehenden Ansprüche, wobei in der Verstärkungseinrichtung (14) die Verstärkung so einstellbar ist, dass die vorverstärkten Auslesesignale einen vorgegebenen Dynamikumfang besitzen.

6. Vorrichtung nach einem der vorhergehenden Ansprüche, wobei das Verhältnis zwischen maximal möglicher und minimal möglicher Verstärkung in der Verstärkungseinrichtung (14) mindestens 50 beträgt.

7. Vorrichtung nach einem der vorhergehenden Ansprüche, wobei der Verstärkungsfaktor in der Verstärkungseinrichtung (14) während des Auslesens eines Speicherleuchtstoffbildes automatisch anpassbar ist.

8. Leuchtstoffausleseverfahren zum Auslesen von in einem Speicherleuchtstoff (6) abgespeicherten Informationen durch
- Detektieren von von dem Speicherleuchtstoff ausgegebener Emissionsstrahlung (7) unter Gewinnung von Detektionssignalen und
- Zwischenspeichern der Detektionssignale,
wobei die zwischengespeicherten, unverarbeiteten Detektionssignale für eine nachfolgende Signalverarbeitung vorverstärkt werden,
**dadurch gekennzeichnet, dass** das Detektieren der Emissionsstrahlung, das Zwischenspeichern und die Vorverstärkung der Detektionssignale auf einem einzigen Chip erfolgt und das Detektieren in einem Bereich eines mit dem Speicherleuchtstoff (6) versehenen Speichermediums unterteilt in mehreren Detektionsabschnitten (121, 122) erfolgt, wobei jeder der Detektionsabschnitte (121, 122) ein CCD-Array aufweist und die Detektionssignale unterschiedlicher CCD-Arrays parallel vorverstärkt werden, so dass die Detektionsabschnitte (121, 122) voneinander getrennt ausgelesen und vorverstärkt werden.

9. Verfahren nach Anspruch 8, wobei das Detektieren durch Ladungskopplung und das Verstärken durch Elektronen-Vervielfachung erfolgt.

10. Verfahren nach einem der Ansprüche 8 oder 9, wobei die Verstärkung pixelweise eingestellt wird.

11. Verfahren nach einem der Ansprüche 8 bis 10, wobei die Verstärkung der Detektionssignale in Abhängigkeit einer Röntgendosis, mit der der Speicherleuchtstoff (6) aktiviert ist, gesteuert wird.

12. Verfahren nach einem der Ansprüche 8 bis 11, wobei die Verstärkung der zwischengespeicherten, unverarbeiteten Detektionssignale so eingestellt wird, dass die verstärkten Detektionssignale einen vorgegebenen Dynamikumfang besitzen.

13. Verfahren nach einem der Ansprüche 8 bis 12, wobei das Verhältnis zwischen maximal möglicher und minimal möglicher Verstärkung mindestens 50 beträgt.

14. Verfahren nach einem der Ansprüche 8 bis 13, wobei die Verstärkung der Detektionssignale automatisch während des Auslesens eines Speicherleuchtstoffbildes angepasst wird.

## Claims

1. A phosphor read-out apparatus for reading out information stored in a storage phosphor (6), comprising
- a detection device (2) for detecting emission radiation (7) that can be emitted by the storage phosphor (6) such as to obtain detection signals,
- a storage device (13) comprising a read-out register for intermediately storing the unprocessed detection signals, and
- an amplification device (14) comprising an amplification register for pre-amplifying the unprocessed, intermediately stored detection signals for subsequent signal processing,
**characterised in that** the detection device (2), the storage device (13) and the amplification device (14) are arranged on a single chip, and the detection device (2) has a number of detection sections (121, 122), each of the detection sections (121, 122) having a CCD array to each of which a read-out register (131, 132) and a amplification register (141, 142) connected to the latter is assigned so that the detection sections (121, 122) can be read out and pre-amplified separately from one another.

2. The apparatus according to claim 1 which are in the form of an electron multiplication CCD (10).

3. The apparatus according to any of the preceding claims, the amplification being variable in the amplification device (14) by pixels.

4. The apparatus according to any of the preceding claims, the amplification in the amplification device (14) being controllable dependently upon an X-ray dose with which the storage phosphor (6) is activated.

5. The apparatus according to any of the preceding claims, it being possible to set the amplification in the amplification device (14) so that the pre-amplified read-out signals have a pre-specified dynamic scope.

6. The apparatus according to any of the preceding claims, the ratio between the maximum possible and the minimum possible amplification in the amplification device (14) being at least 50.

7. The apparatus according to any of the preceding claims, the amplification factor being automatically adjustable in the amplification device (14) during the read-out of a storage phosphor image.

8. A phosphor read-out method for reading out information stored in a storage phosphor (6) by
- detecting emission radiation (7) emitted from the storage phosphor such as to obtain detection signals, and
- intermediately storing the detection signals,
the intermediately stored, unprocessed detection signals being pre-amplified for subsequent signal processing,
**characterised in that** the detection of the emission radiation, the intermediate storage and the pre-amplification of the detection signals take place on a single chip, and the detection takes place in a region of a storage medium provided with the storage phosphor (6) sub-divided into a number of detection sections (121, 122), each of the detection sections (121, 122) having a CCD array, and the detection signals of different CCD arrays being pre-amplified in parallel so that the detection sections (121, 122) are read out and pre-amplified from one another separately.

9. The method according to Claim 8, the detection taking place by means of charge coupling, and the amplification by means of electron multiplication.

10. The method according to either of Claims 8 or 9, the amplification being set by pixels.

11. The method according to any of Claims 8 to 10, the amplification of the detection signals being controlled dependently upon an X-ray dose with which the storage phosphor (6) is activated.

12. The method according to any of Claims 8 to 11, the amplification of the intermediately stored, unprocessed detection signals being set such that the amplified detection signals have a pre-specified dynamic scope.

13. The method according to any of Claims 8 to 12, the ratio between the maximum possible and the minimum possible amplification being at least 50.

14. The method according to any of Claims 8 to 13, the amplification of the detection signals being adjusted automatically during the read-out of a storage phosphor image.

## Revendications

1. Dispositif de lecture de couche photostimulable permettant de lire les informations enregistrées sur une couche d'enregistrement photostimulable (6), comportant
- une unité de détection (2) servant à détecter un rayonnement d'émission (7) émis par la couche d'enregistrement photostimulable (6) en obtenant des signaux de détection,
- un dispositif d'enregistrement (13) comportant un registre de lecture pour l'enregistrement temporaire des signaux de détection non traités, et
- un dispositif d'amplification (14) comportant un registre d'amplification servant à pré-amplifier les signaux de détection non traités temporairement enregistrés en vue d'un traitement de signaux ultérieur,
**caractérisé en ce que** l'unité de détection (2), le dispositif d'enregistrement (13) et le dispositif d'amplification (14) sont agencés sur une seule puce et **en ce que** l'unité de détection (2) présente plusieurs sections de détection (121, 122), chacune des sections de détection (121, 122) présentant un matrice de dispositifs à couplage de charge à laquelle est respectivement associée un registre de lecture (131, 132) et un registre d'amplification (141, 142) raccordé à ce dernier, de sorte que les sections de détection (121, 122) peuvent être lues et pré-amplifiées séparément l'une de l'autre.

2. Dispositif selon la revendication 1, conçu sous la forme d'un dispositif à couplage de charge multiplicateur d'électrons (10).

3. Dispositif selon l'une des revendications précédentes, dans lequel l'amplification au sein du dispositif d'amplification (14) peut varier de pixel à pixel.

4. Dispositif selon l'une des revendications précédentes, dans lequel l'amplification au sein du dispositif d'amplification (14) est réglable en fonction d'une dose de rayons X venant activer la couche d'enregistrement photostimulable (6).

5. Dispositif selon l'une des revendications précédentes, dans lequel l'amplification au sein du dispositif d'amplification (14) est réglable de sorte que les signaux de lecture pré-amplifiés possèdent une plage dynamique prédéterminée.

6. Dispositif selon l'une des revendications précédentes, dans lequel le rapport entre l'amplification maximale possible et l'amplification minimale possible au sein du dispositif d'amplification (14) est d'au moins 50.

7. Dispositif selon l'une des revendications précédentes, dans lequel le facteur d'amplification au sein du dispositif d'amplification (14) est adaptable automatiquement au cours de la lecture d'une image de la couche d'enregistrement photostimulable.

8. Procédé de lecture d'un support photostimulable permettant de lire les informations enregistrées sur une couche d'enregistrement photostimulable (6) consistant à :
- détecter un rayonnement d'émission (7) émis par la couche d'enregistrement photostimulable en obtenant des signaux de détection, et à
- enregistrer temporairement ces signaux de détection,
dans lequel les signaux de détection non traités temporairement enregistrés sont pré-amplifiés en vue d'un traitement de signaux ultérieur,
**caractérisé en ce que** la détection du rayonnement d'émission, l'enregistrement temporaire et l'amplification des signaux de détection s'effectue sur une puce unique et **en ce que** la détection s'effectue dans le contexte d'un support d'enregistrement pourvu de ladite couche d'enregistrement photostimulable (6) divisé en plusieurs sections de détection (121, 122), chacune des sections de détection (121, 122) présentant une matrice de dispositifs à couplage de charge, et les signaux de détection de différentes matrices de dispositifs à couplage de charge sont pré-amplifiés en parallèle de sorte que les sections de détection (121, 122) peuvent être lues et pré-amplifiées séparément l'une de l'autre.

9. Procédé selon la revendication 8, dans lequel la détection s'effectue par couplage de charge et l'amplification par multiplication d'électrons.

10. Procédé selon l'une des revendications 8 ou 9, dans lequel l'amplification est réglée pixel par pixel.

11. Procédé selon l'une des revendications 8 à 10, dans lequel l'amplification des signaux de détection est réglée en fonction d'une quantité de rayons X venant activer la couche d'enregistrement photostimulable (6).

12. Procédé selon l'une des revendications 8 à 11, dans lequel l'amplification des signaux de détection non traités temporairement enregistrés est réglée de telle sorte que les signaux de détection amplifiés possèdent une plage dynamique prédéterminée.

13. Procédé selon l'une des revendications 8 à 12, dans lequel le rapport entre l'amplification maximale possible et l'amplification minimale possible est d'au moins 50.

14. Procédé selon l'une des revendications 8 à 13, dans lequel l'amplification des signaux de détection est adaptée automatiquement au cours de la lecture d'une image de la couche d'enregistrement photostimulable.
